# EUROPÄISCHE PATENTSCHRIFT

(11) **EP 3 570 653 B1**
(45) Veröffentlichungstag und Bekanntmachung des Hinweises auf die Patenterteilung: **23.12.2020**
(21) Anmeldenummer: 18707617.9
(22) Anmeldetag: 17.01.2018
(51) Int. Cl.: A01C 1/04, A01G 27/06, A01G 20/20, A01C 1/02

(54) **SAATPAD, KEIMSCHALE, LOCHBLECHEINSATZ, HARDWARE-KIT UND KEIM-KIT ZUR ANZUCHT VON KEIMPFLANZEN, SOWIE EIN VERFAHREN ZUM WÄSSERN EINES SAATPADS**
SEED PAD, SEED TRAY, PERFORATED SHEET-METAL INSERT, HARDWARE KIT AND SEED KIT FOR GERMINATING SEEDS, AND METHOD FOR WATERING A SEED PAD
TAMPON D'ENSEMENCEMENT, PLAT DE GERMINATION, INSERT À TÔLE PERFORÉE, JEU DE MATÉRIEL ET JEU DE GERMINATION POUR LA CULTURE DE PLANTULES AINSI QUE PROCÉDÉ D'HYDRATATION D'UN TAMPON D'ENSEMENCEMENT

(30) Priorität: 18.01.2017 DE 102017100903; 18.01.2017 DE 202017100245 U
(43) Veröffentlichungstag der Anmeldung: 27.11.2019
(73) Patentinhaber: Eastside Impex Handelsgesellschaft mbH, 13189 Berlin (DE)
(72) Erfinder: WANNEMÜLLER, Carsten, 12557 Berlin (DE); SAUERMANN, Denis, 13503 Berlin (DE)
(74) Vertreter: Hertin und Partner Rechts- und Patentanwälte PartG mbB
(86) Internationale Anmeldenummer: PCT/DE2018/100033
(87) Internationale Veröffentlichungsnummer: WO 2018/133903

(56) Entgegenhaltungen:
- CH-A2- 709 442
- DE-U1- 9 413 987
- GB-A- 1 581 228
- KR-A- 20160 123 756
- US-A- 3 298 133
- US-A- 4 442 627

## Beschreibung

Die Erfindung betrifft ein Keim-Kit zur Anzucht von Keimpflanzen.

Die Anzucht von sogenannten Keimpflanzen, wie beispielsweise Gartenkresse, Bockshornklee oder Rauke, im häuslichen Umfeld und der Verzehr der eigenen Ernte dieser Keimpflanzen ist ein Trend, der sich in den letzten Jahren aus den USA kommend auch immer stärker in Europa entwickelt hat. Der Begriff "Keimpflanzen" umfasst im Sinne der Erfindung bevorzugt micro greens und/oder Kressen.

Im Bereich der Keimpflanzen-Anzucht werden verschiedene Hilfsmittel und Vorrichtungen am Markt angeboten, mit denen ein Nutzer Keimpflanzen selbst ziehen kann. Im Stand der Technik ist beispielsweise ein sogenannter Kresse-Igel aus Ton bekannt, bei dem eine igelförmige Tonschale mit Wasser gefüllt wird, wobei in die Vertiefung der Igel-Form beispielsweise Kresse-Saatkörner eingefüllt werden, die nach kurzer Zeit keimen und nach mehreren Tagen geerntet werden können. Darüber hinaus sind Keimschalen aus Kunststoff bekannt, die aber ein klassisches Wegwerf-Produkt darstellen und daher schon aus ökologischer Sicht nachteilig sind. Darüber hinaus erfüllen Keimschalen aus Kunststoff keine besonderen ästhetischen Ansprüche und können des Weiteren nicht bei hohen Temperaturen, beispielsweise in einer Geschirrspülmaschine, gereinigt werden.

Weiterhin sind aus DE 9413987 Keimvorrichtungen bekannt, die mittels eines in ein Flüssigkeitsreservoire hineinragenden Kartonfortsatzes Flüssigkeit auf einen mit Pflanzensamen beklebten Vorrichtungsabschnitt saugen.

In GB 1581228 wird eine Vorrichtung beschrieben, die zur Bewässerung von Topfpflanzen genutzt werden kann. Die beschriebenen Vorrichtungen umfassen einen Container, der als Flüssigkeitsreservoir dient. Oberhalb des Flüssigkeitsreservoirs ist ein Tablett angeordnet, auf dem eine Flüssigkeit-speichernde Matte aufgelegt ist, die Fortsätze hat, die über die Ränder des Tabletts hinweg in das unterhalb liegende Flüssigkeitsreservoirs hineinragen.

Die Dokumente US3,298,133A und CH709442A2 beschreiben Vorrichtungen zum Aufkeimen lassen von Pflanzensamen, die eine als Wasserreservoir dienende Schale und einen löchrigen Einsatz umfassen, wobei der Einsatz in die Schale eingehängt werden kann.

Die derzeit am Markt erhältlichen Produkte erfordern üblicherweise vom Nutzer einen teilweise nicht unerheblichen Wartungs- und Pflegeaufwand der Keimlinge und Jungpflanzen, der bisher zu einer gewissen Kaufzurückhaltung geführt hat, insbesondere beim modernen, urbanen Konsumenten. Dieser Wartungs- und Pflegeaufwand besteht beispielsweise darin, dass die Keimlinge und/oder die Keimpflanzen regelmäßig gewässert werden müssen oder dass Vorkehrungen getroffen werden müssen, die ein Austrocknen des Saatgutträgers oder eine unerwünschte Schimmelbildung verhindern.

Insbesondere wenn die aus dem Stand der Technik bekannten Keimschalen mit Erde zur Anzucht der Keimpflanzen betrieben werden, besteht die Gefahr, dass Insekten oder Kleinst-Tiere, die die Anzuchterde besiedeln, in das häusliche Umfeld der Nutzer gelangen oder dass es zu Verunreinigungen bei der Anzucht der Keimpflanzen durch die Erde kommt.

Es ist demnach Aufgabe der Erfindung, Vorrichtungen und Verfahren zur Anzucht von Keimpflanzen bereitzustellen, die nicht die Nachteile und Mängel des Standes der Technik aufweist und ein unkompliziertes, hygienisches Anziehen von Keimpflanzen im häuslichen Umfeld ermöglicht, wobei darüber hinaus die äußere Gestalt der Lösung ein optisch ansprechendes Aussehen haben soll.

Zur Lösung dieser Aufgabe ist ein Keim-kit vorgesehen, umfassend mindestens
- ein Saatpad umfassend eine Matte und Saatkörner vorgesehen, wobei die Matte einen Docht zum Eintauchen in ein Flüssigkeitsreservoir umfasst, so dass eine Flüssigkeit mit Hilfe von Kapillarkräften durch den Docht in die Matte förderbar und in der Matte verteilbar ist, wobei die Matte Saatkörner umfasst, die mit einen ersten Klebstoff befestigt sind, wobei der erste Klebstoff je nach Beschaffenheit der Samenkörner variierbar ist und Guarkernmehl, Johannisbrotkernmehl und/oder Xanthan umfasst, sowie
- ein Hardware-Kit umfassend eine Keimschale und ein Lochblecheinsatz, wobei der Lochblecheinsatz eine Bodenplatte mit Löchern und zwei Seitenteile mit Haltevorrichtungen umfasst, wobei der Lochblecheinsatz mit den Haltevorrichtungen lösbar in die Keimschale einhängbar ist, und wobei die Keimschale ein Flüssigkeitsreservoir bildet, das mit einer Flüssigkeit, zum Beispiel Wasser, befüllbar ist, und der Lochblecheinsatz lösbar in die Keimschale einhängbar ist, wobei auf dem Lochblecheinsatz das mindestens eine Saatpad so anordnenbar ist, dass der Docht des mindestens einen Saatpads in die Flüssigkeit eintaucht, wobei der Docht im Wesentlichen vollflächig auf einer Unterseite der Matte angeordnet vorliegt und mit einem zweiten Klebstoff befestigt ist.

Es ist im Sinne der Erfindung bevorzugt, dass die Saatkörner zu Keimpflanzen heranwachsen, die aktuell auch deshalb zunehmend in der öffentlichen Diskussion an Bedeutung gewinnen, da die Konzentration an Vitaminen, Mineralstoffen und Enzymen in diesen jungen Pflanzen um ein Vielfaches höher ist, als bei ausgewachsenem Gemüse. Sie sind daher besonders geeignet, gerade in urbanen Ballungszentren die Versorgung der Bevölkerung mit diesen wichtigen Nährstoffen sicherzustellen. Keimpflanzen sind klassischen Gemüse auch im Punkte Frische überlegen, insbesondere in den Wintermonaten, da sie direkt nach der Ernte in der eigenen Küche verzehrt werden können.

Es ist im Sinne der Erfindung bevorzugt, dass das Saatpad, umfassend die Matte und Saatkörner, als Verbrauchsmaterial ausgebildet ist, das nach einmaliger Verwendung, das heißt nach erfolgreicher Anzucht der Keimpflanzen und deren Ernte, besonders einfach als Biomüll entsorgt werden kann.

Das Saatpad bildet bevorzugt einen Saatgutträger, auf dem das Saatgut, das heißt die Saatkörner, in einer der Saatgutsorte entsprechend definierten Positionierung befestigt werden kann. Dafür werden die lose erhältlichen Saatkörner möglichst gleichmäßig auf einer zugeschnittenen Matte verteilt und mit einem ersten Klebstoff bestrichen beziehungsweise überzogen, der ein Verbleiben des Saatgutes auf der Matte während des Keimvorgangs gewährleistet. Der Klebstoff muss zumindest solange das Saatgut auf der Matte halten, bis das Saatgut nach einigen Tagen mit der Matte verwurzelt ist. Der erste Klebstoff ist vorzugsweise wasserlöslich und wachstumsförderlich. Es ist im Sinne der Erfindung auch bevorzugt, dass es sich bei dem ersten Klebstoff um ein als Lebensmittel beziehungsweise als Lebensmittelzusatzstoff zugelassenes Naturprodukt handelt, das auch für eine Bio-Zertifizierung geeignet ist.

Es war vollkommen überraschend, dass ein erster Klebstoff bereitgestellt werden konnte, der für unterschiedliche Saatgutsorten variierbar ist. Dies bedeutet im Sinne der Erfindung bevorzugt, dass für unterschiedliche Saatgutsorten unterschiedliche erste Klebstoffe verwendet werden können, die sich insbesondere hinsichtlich ihrer Zusammensetzung unterscheiden. Die Beschaffenheit der Samenkörner kann beispielsweise hinsichtlich der Größe der Körner und oder der Struktur ihrer Oberflächen variieren. Versuche haben gezeigt, dass der im Rahmen der Erfindung verwendete erste Klebstoff vorteilhafterweise die Keimfähigkeit des Saatguts nicht beeinträchtigt.

Die Matte, die zusammen mit den Saatkörnern das Saatpad bildet, weist einen Docht auf, der vorzugsweise von einem gurtartigen Material gebildet wird, wobei das Material eine Naturfaser, bevorzugt Leinen, umfasst. Der Docht kann daher bevorzugt auch als Leinengurt bezeichnet werden. Es kann für einige Anwendungen des Saatpads auch bevorzugt sein, ein Jutematerial für den Docht zu verwenden. Wenn Jute verwendet wird, kann die Jute beispielsweise mit Keimöl als Spinnöl verarbeitet sein. Es ist insbesondere bevorzugt, wenn die Dichte des Gewebes bei circa 300 g/m² liegt. Es hat sich gezeigt, dass in diesem Dichtebereich besonders starke Kapillarkräfte auftreten.

Vorteilhafterweise sind die reinen Naturfasern, aus denen die Matte und der Docht bestehen, auch im Bereich des ökologischen Landbaus zugelassen. Es ist darüber hinaus bevorzugt, dass sowohl die Matte, der Docht, sowie die bevorzugt eingesetzten Klebstoffe aus Natur-Materialien hergestellt werden und unbelastet und kompostierbar sind. Natur-Materialien oder natürliche Materialen sind im Sinne der Erfindung bevorzugt solche Materialien, die aus der Natur entnommen werden können und denen keine Stoffe beigefügt sind, die in der Natur nicht originär vorkommen. Der Begriff "unbelastet" bedeutet im Sinne der Erfindung bevorzugt, dass die Materialien keine Schadstoffe beinhalten. Der Begriff "kompostierbar" bedeutet im Sinne der Erfindung bevorzugt, dass die Materialien im Biomüll und/oder auf dem Kompost entsorgt werden können.

In einer Ausführungsform der Erfindung ist es bevorzugt, dass die Matte wenigstens ein Naturmaterial umfasst und ausgewählt ist aus einer Gruppe umfassend Hanf, Lyocell, Filz, beispielsweise aus Grass und/oder Bambus, Kokosfaser, Vermiculit, Perlit, Jute, Leinen, Flachs, Cellulose, Holz, Steinwolle, Agar-Agar und/oder einer Kombination daraus. Es ist insbesondere bevorzugt, dass die Matte aus nachwachsenden Rohstoffen hergestellt wird und beispielsweise als Vlies oder Filzmatte vorliegt. Es hat sich gezeigt, dass insbesondere bei der Verwendung einer Matte aus Hanf eine besonders gute Wasserspeicherkapazität in der Matte erreicht werden kann, die dazu beiträgt, dass nach einem einmaligen Wässern des Saatpads während der Anzucht der Keimpflanzen in der Regel keine weitere Flüssigkeitszugabe erforderlich ist.

Es ist im Sinne der Erfindung insbesondere bevorzugt, Bio-Saatgut als Saatgut zu verwenden. Der Begriff "bio" bedeutet im Sinne der Erfindung bevorzugt, dass sich die Hersteller und/oder Erzeuger des Saatguts oder anderer Materialien und Stoffe, die für die vorliegende Erfindung von Bedeutung sind, sich zur Einhaltung der Grundsätze des ökologischen Landbaus verpflichtet haben und zum Teil auch diesbezüglich zertifiziert sind. Es ist insbesondere bevorzugt, dass die bevorzugt eingesetzten Klebstoffe für Lebensmittel zugelassene Natur-Klebstoffe sind. Es ist im Sinne der Erfindung weiter bevorzugt, die Begriff "Saatkörner" und "Samenkörner" synonym zu verwenden. Darüber hinaus werden die Begriffe "Klebstoff" und "Kleber" bevorzugt synonym verwendet.

Erfindungsgemäß liegt der Docht im Wesentlichen vollflächig auf einer Unterseite der Matte angeordnet vor und ist mit einem zweiten Klebstoff an der Matte befestigt. Der Begriff "im Wesentlichen" stellt für den Fachmann keinen unklaren Begriff dar, da der Fachmann weiß, dass mit einer im Wesentlichen vollflächigen Anbringung gemeint ist, dass die Unterseite der Matte nahezu vollständig mit dem Dochtmaterial verbunden vorliegt. Diese Formulierung bedeutet nicht, dass der zweite Klebstoff vollflächig an der Grenzfläche zwischen Matte und Docht angeordnet vorliegt. Es ist im Sinne der Erfindung insbesondere bevorzugt, wenn der zweite Kleber punktförmig zwischen Matte und Docht angeordnet vorliegt, so dass eine punktförmige Befestigung erreicht wird. Dadurch wird vorteilhafterweise ermöglicht, dass die Wurzeln der Keimpflanzen die Matte und den zweiten Kleber durchdringen können. Beispielsweise kann der zweite Kleber in Form von fünf Klebepunkten angebracht werden, von denen sich je ein Klebepunkt in einer Ecke befindet und der fünfte Klebepunkt zentral und/oder mittig auf der Unterseite der Matte. Es hat sich gezeigt, dass dadurch eine besonders gute Versorgung der Matte mit Flüssigkeit aus dem Flüssigkeitsreservoir erzielt werden kann. Außerdem wird durch die bevorzugte Anbringung des Dochts an der Unterseite der Matte die Belüftung des Saatguts und/oder der Matte verbessert, was vorteilhafterweise dazu beiträgt, dass ein unerwünschte Schimmelbildung vermieden wird, obwohl die Matte vorzugsweise durch den Kontakt des Dochtes mit der Flüssigkeit im Flüssigkeitsreservoir stets feucht gehalten wird.

Die im Wesentlichen vollflächige Anbringung schließt allerdings nicht aus, dass es kleinere Bereiche der Unterseite der Matte geben kann, die nicht von dem Dochtmaterial bedeckt sind, um zusätzliche Funktionalitäten zu gewährleisten. Es ist bevorzugt, dass der zweite Kleber wasserlöslich ist und insbesondere vor der Verwendung des Saatpads, beispielsweise auf dem Transport zur Verkaufsstätte oder zum Nutzer, eine sichere Befestigung zwischen Docht und Matte gewährleistet.

Es ist im Sinne der Erfindung bevorzugt, dass der Docht aus einem vorzugsweise rechteckigen Leinen-Gurtstück besteht, dass eine größere Grundfläche aufweist als die Matte, an deren Unterseite der Docht befestigt wird. Der Docht besteht bevorzugt aus einem im Wesentlichen vollflächig an der Unterseite der Matte befestigten Abschnitt und einem weiteren Abschnitt, der über die Matte hinausragt. Es ist im Sinne der Erfindung bevorzugt, dass dieser zweite, überragende Abschnitt in ein Flüssigkeitsreservoir eintaucht, so dass eine Flüssigkeit mithilfe von Kapillarkräften, die vorzugsweise in dem Docht wirken, durch das Dochtmaterial in die Matte gefördert wird, wo sie sich bevorzugt gleichmäßig verteilt. Durch die Vorsehung des Dochts und durch seine Befestigung an der Unterseite der Matte wird vorteilhafterweise erreicht, dass das Saatgut bei der Anzucht von Keimpflanzen nur ein einziges Mal (bei Verwendung einer in seinen Dimensionen zur Matte korrespondierenden, beispielsweise erfindungsgemäßen Keimschale) bewässert werden muss und anschließend bis zur Ernte keiner weiteren Bewässerung mehr bedarf. Dies wird insbesondere dadurch erreicht, dass das Saatpad über die Kapillarwirkung des an der Unterseite der Matte befestigten Dochts aus dem Flüssigkeitsreservoir mit Flüssigkeit versorgt wird.

Das Material, aus dem der Docht gefertigt ist, weist vorteilhafterweise eine gewebe- und/oder netzartige Struktur auf, die es vorteilhafterweise ermöglicht, dass die Wurzeln der Keimpflanzen den Docht durchdringen können. Dazu umfasst der Docht vorzugsweise Gewebeöffnungen, die von den Wurzeln durchdrungen werden können.

Überraschenderweise kann das Saatgut der Keimpflanzen je nach Außentemperatur und Verdunstungsrate bis zu zwei Wochen mit Flüssigkeit versorgt werden, ohne dass es zu Schimmelbildung oder Austrocknung des Saatpads kommt.

Es ist im Sinne der Erfindung bevorzugt, dass es sich bei der Flüssigkeit im Flüssigkeitsreservoir um Wasser handelt. Es kann für einzelne Anwendungen allerdings auch bevorzugt sein, dass dem Wasser Zusatzstoffe, wie beispielsweise Farbe oder Dünger, beigefügt sind. Es ist im Sinne der Erfindung insbesondere bevorzugt, dass es sich dabei um natürliche und biologisch-abbaubare Zusatzstoffe handelt. Mit dem bevorzugten Saatpad kann ohne nennenswerten Pflegeaufwand die Anzucht von Keimpflanzen besonders unkompliziert vorgenommen werden. Insbesondere werden mit dem erfindungsgemäßen Saatpad hohe Erfolgsquoten und ein attraktiver Ernteertrag erreicht. Es war vollkommen überraschend, dass eine Lösung bereitgestellt werden kann, bei der das regelmäßige Wässern des Saatgutträgers beziehungsweise ein regelmäßiger Wasserwechsel in einer Keimschale entfallen kann.

In einer bevorzugten Ausführungsform der Erfindung weist das Saatpad einen Schichtaufbau auf umfassend den Docht, der mit dem zweiten Kleber auf der Unterseite der Matte befestigt ist, wobei auf und/oder in der Matte die Samenkörner angeordnet vorliegen, die mit dem ersten Klebstoff auf der Oberseite der Matte fixiert sind. Es ist bevorzugt, dass die Anbringung des Dochtes an der Unterseite der Matte insbesondere im Wesentlichen vollflächig erfolgt, während die bevorzugte Klebeverbindung punktförmig ausgebildet ist. Die Anordnung der Samenkörner auf der Matte bedeutet im Sinne der Erfindung bevorzugt, dass die Samenkörner beispielsweise auf der Oberseite der Matte verteilt werden. Es ergibt sich für den Fachmann, der mit der Struktur und Beschaffenheit von Keimmatten vertraut ist, dass die Oberseite der Matte keine ebene, glatte Fläche darstellt, sondern bevorzugt Vertiefungen und Erhebungen umfasst, so dass die Samenkörner nicht in einer geschlossenen, flachen Ebene zu liegen kommen, sondern dass sie zum Teil in den Vertiefungen, zum Teil auf den Erhebungen angeordnet vorliegen. Obwohl sich lokale Dichte-Unterschiede hinsichtlich der Verteilung der Saatkörner auf der Matte ergeben können, ist es im Sinne der Erfindung bevorzugt, wenn die Saatkörner über die gesamte Matte möglichst homogen verteilt vorliegen, wobei für die Bestückung einer Saatgutmatte beispielsweise zwischen 3 und 7 g Saatgut verwendet werden.

Die bevorzugte Vorsehung eines Schichtaufbaus des Saatpads war für den Fachmann kein naheliegender Schritt. Zum einen war es nicht naheliegend, die Befestigung der Saatkörner mit einem ersten Kleber vorzusehen und für die Befestigung des Dochtes an der Matte einen zweiten Kleber zu verwenden, der vom ersten Kleber unterschiedlich sein kann. Aus Gründen der Einfachheit und Ökonomie würde der durchschnittliche Fachmann einen einzigen, gleichen Kleber verwendet haben. Darüber hinaus war auch die konkrete Anordnung der Schichten keinesfalls naheliegend. Weder die Anbringung des Dochtes auf der Unterseite der Matte, noch die konkrete Reihenfolge der Schichten und ihre bevorzugte Verbindung untereinander mit dem ersten und dem zweiten Kleber wird im Stand der Technik offenbart oder durch ihn nahegelegt. Es war vielmehr vollkommen überraschend, dass der bevorzugte Schichtaufbau wesentlich dazu beiträgt, dass das Saatpad während seiner Benutzung vorteilhafterweise nur einmal gewässert werden muss und ansonsten ohne die Zufuhr weiterer Flüssigkeit auskommt, bis die micro green-Pflanzen geerntet werden können.

Es kann im Sinne der Erfindung auch bevorzugt sein, dass die Saatkörner in der Matte angeordnet vorliegen, wobei diese Anordnung bevorzugt auch als Einbettung bezeichnet wird. Dabei ist zu beachten, dass die Saatkörner bevorzugt in einem oberen Bereich der Matte eingebettet werden, damit die Keimlinge das aufliegende Mattenmaterial durchdringen können. Es ist bevorzugt, dass die Einbettungstiefe, das heißt die Tiefe innerhalb der Matte, in der die Saatkörner angeordnet sind, mit der Struktur des Mattenmaterials korrespondiert, um ein Durchdringen des Materials durch die Keimlinge zu gewährleisten.

In einer bevorzugten Ausführungsform der Erfindung weist die Matte eine Höhe in einem Bereich von bevorzugt 0,5 bis 3 cm auf, besonders bevorzugt in einem Bereich von 1 bis 1,5 cm und am meisten bevorzugt in einem Bereich von 1,2 bis 1,3 cm. Es hat sich gezeigt, dass dadurch eine besonders gute Wasserspeicherkapazität der Matte gewährleistet werden kann, wobei gleichzeitig ein großer, unökonomischer Verbrauch an Mattenmaterial vermieden wird.

Es ist im Sinne der Erfindung bevorzugt, dass der erste Klebstoff Guarkernmehl, Johannisbrotkernmehl und/oder Xanthan umfasst. Guarkernmehl ist im Sinne der Erfindung ein pflanzliches Verdickungsmittel aus den Samen der Guarpflanze, das vorteilhafterweise auch ohne die Zuführung von Wärme binden kann. Der Johannisbrotbaum ist eine Pflanze aus der Familie der Hülsenfrüchte, aus deren Samen Johannisbrotkernmehl gewonnen wird. Es stellt vorteilhafterweise ein pflanzliches Bindemittel dar, das üblicherweise als weiß-beiges Pulver vorliegt, das ein Polysaccharid umfasst. Xanthan ist ein von Bakterien gebildetes langkettiges Kohlenhydrat, das als Ballaststoff gilt, da es für den menschlichen Organismus unverdaulich ist. Vorteilhafterweise weist der erste Klebstoff, der diese drei Inhaltsstoffe oder eine Teilmenge dieser Inhaltsstoffe umfasst, eine lange Haltbarkeit im trockenen Zustand auf und sorgt im getrockneten, abgebundenen Zustand für eine besonders stabile und feste Befestigung der Saatkörner an der Matte. Dadurch wird insbesondere ermöglicht, dass die Saatpads gemäß der vorliegenden Erfindung gut transportiert werden können, da bei normaler Handhabung ein Abfallen der Samenkörner von der Matte durch Verwendung des ersten Klebstoffs besonders wirksam vermieden wird.

Die erfindungsgemäße Zusammensetzung des ersten Klebstoffs ermöglicht vorteilhafterweise, dass sich der erste Klebstoff beim Wässern des Saatguts zum "richtigen" Zeitpunkt im Wasser auflöst. Der Begriff des Wässerns umfasst im Sinne der Erfindung bevorzugt einen Angießvorgang und/oder einen Vollsaugvorgang. Beim Angießen werden die Saatpads auf den Lochblecheinsatz aufgelegt und der Lochblecheinsatz mit den Pads in die Keimschale eingehängt. Dann werden die Pads in einem bevorzugt langsamen Gießvorgang mit einer Flüssigkeit, beispielsweise Wasser, begossen, wobei dieser Vorgang vorzugsweise 2 min dauert. Dazu kann beispielsweise eine Gießkanne verwendet werden, die in vorzugsweise geschwungenen Bewegungen über die Keimschale geführt wird. Beim Angießen bildet sich bevorzugt eine Schicht zwischen Lochblecheinsatz und Füllhöhe des Wassers aus, in der sich keine Flüssigkeit befindet. Diese Schicht weist vorzugsweise eine Höhe von 3 bis 12 mm, besonders 5 bis 8 mm auf. Es ist im Sinne der Erfindung bevorzugt, dass ein Saatpad ungefähr ein Flüssigkeitsvolumen von 60 bis 100 ml, besonders bevorzugt 80 ml Flüssigkeit aufnehmen kann.

Es ist im Sinne der Erfindung bevorzugt, dass das mindestens eine Saatpad auf den Bodenbereich beziehungsweise auf die Bodenplatte des Lochblecheinsatzes aufgelegt wird. Durch die bevorzugte Struktur des Lochblecheinsatzes aufweisend eine Bodenplatte, Seitenteile und Haltevorrichtungen ist es im Sinne der Erfindung ebenso bevorzugt, die Formulierung des "Einlegens in den Lochblecheinsatz" zu verwenden. Diese Formulierungen werden insbesondere synonym verwendet.

Bei dem Vollsaugvorgang wird die Keimschale zunächst mit einer Flüssigkeit, beispielsweise Wasser, gefüllt. Dabei hat es sich als vorteilhaft erwiesen, wenn eine Flüssigkeitsmenge in einem Bereich von bevorzugt 0,2 bis 1,0 I, besonders bevorzugt in einem Bereich von 0,5 bis 0,7 I und am meisten bevorzugt von 0,6 I verwendet wird. Vorzugsweise kann die Keimschale eine optische Markierung aufweisen, die einer entsprechenden Füllhöhe entspricht. Dies ist besonders vorteilhaft, weil die Inbetriebnahme des Saatpads und/oder des Keim-Kits dann vollkommen ohne Hilfsmittel, wie Meßbecher oder Gießkanne, erfolgen kann.

Anschließend werden die Saatpads in den Lochblecheinsatz eingelegt und der Lochblecheinsatz mit den Saatpads in die Keimschale eingehängt. Es kann ebenso bevorzugt sein, den Lochblecheinsatz in die Keimschale einzuhängen und dann die Saatpads auf dem Lochblecheinsatz anzuordnen.

Es ist beim Vollsaugvorgang bevorzugt, dass der Füllstand der Flüssigkeit in der Keimschale höher ist als der Bodenbereich des Lochblecheinsatzes. Mit anderen Worten befindet sich der Bodenbereich des Lochblecheinsatzes und der untere Teil der aufgelegten Saatpads in der Flüssigkeit. Vorteilhafterweise saugen die Pads die Flüssigkeit, die oberhalb des Bodenbereichs des Lochblecheinsatzes steht, auf, so dass eine besonders gute Wässerungswirkung der Saatpads erreicht wird. Dies wird insbesondere durch die Verwendung von Hanf als besonders bevorzugtes Mattenmaterial ermöglicht, da die Erfinder erkannt haben, dass Hanf hervorragende Wasserabsorptionsfähigkeiten aufweist.

Wenn als Bewässerungsmechanismus ein Angießvorgang verwendet wird, kann ein zu schnelles Auflösen des ersten Klebstoffes, mit dem die Saatkörner auf der Matte befestigt sind, dazu führen, dass die Saatkörner weggespült werden mit der Folge, dass sich auf der Matte einerseits kleine Saatguthaufen und andererseits kahle Stellen ohne Saatgut bilden würden. Bei einem zu langsamen Auflösen des Klebstoffs kann es vorkommen, dass nicht ausreichend Flüssigkeit an das Saatgut gelangt, da es im Klebstoff quasi eingekapselt wird. Dies kann dazu führen, dass der Keimprozess nicht oder nur vereinzelt in Gang gesetzt wird. Der Bewässerungsvorgang kann daher besonders einfach und unkompliziert gestaltet werden, wenn vorzugsweise der Vollsaugvorgang durchgeführt wird.

Es war vollkommen überraschend, dass ein für Lebensmittel zugelassener Natur-Klebstoff aus den genannten Materialien bereitgestellt werden kann, der insbesondere nach dem Wässern nicht wieder geliert, was nachteilhafterweise zu einer Einkapselung des Saatguts durch eine gelartige Kleberschicht führen würde, wodurch der Keimprozess gestoppt würde. Es ist im Sinne der Erfindung bevorzugt, dass die Saatgut-Sorten ausgewählt sind aus den folgenden Pflanzensorten: Rauke, Gartenkresse, Radieschen, Senf, Rotkohl, Brokkoli, Linse und/oder Bockshornklee, wobei die Erfindung nicht auf diese Pflanzensorten beschränkt ist, sondern insbesondere Anwendung findet für die Saatkörner aller Pflanzensorten, die mittels einem Kleber auf einer Matte befestigt werden können.

Es ist bevorzugt, dass der erste Klebstoff und/oder der zweite Klebstoff Guarkernmehl, Johannisbrotkernmehl und/oder Xanthan umfassen, wobei es insbesondere bevorzugt ist, dass der erste Klebstoff Guarkernmehl und Johannisbrotkernmehl umfasst, während der zweite Klebstoff Xanthan umfasst. Vorzugsweise liegt der Anteil von Johannisbrotkernmehl und/oder Guarkernmehl in einem Bereich von bevorzugt 1 bis 3 %, besonders bevorzugt 1 bis 1,5 % und/oder der Anteil von Xanthan in einem Bereich von bevorzugt 1 bis 3 %, besonders bevorzugt bei 2 %. Ein Anteil von 2 % bedeutet im Sinne der Erfindung bevorzugt, dass der Klebstoff 98 ml Wasser und 2 g Inhaltsstoff, insbesondere Guarkernmehl, Johannisbrotkernmehl und/oder Xanthan, umfasst. Es hat sich gezeigt, dass vor allem größere Saatkörner besonders gut an der Matte befestigt werden können, wenn der erste Kleber einen höheren Anteil von Inhaltsstoff, vorzugsweise Guarkernmehl und/oder Johannisbrotkernmehl, umfasst, beispielsweise in einem Bereich von jeweils 1,5 %. Es ist bevorzugt, dass dem Kleber weitere Zusatzstoffe beigefügt werden können, beispielsweise Salze, zum Beispiel Kochsalz, oder Zucker, beispielsweise Glukose. Es ist insbesondere bevorzugt, dass die Klebstoffe protein- und/oder kohlehydratbasiert sind und/oder dass sie den Grundsätzen der veganen Ernährung entsprechen.

In einer bevorzugten Ausführungsform der Erfindung ist weist die Keimschale vorzugsweise eine quaderförmige Grundform und/oder abgerundete Ecken und/oder Kanten auf. Das Material der Keimschale ist bevorzugt ausgewählt aus einer Gruppe umfassend Porzellan, Keramik, Holz, Stein, Beton, Glass, Metall und/oder einer Kombination daraus, wobei eine Wanddicke beispielsweise des Porzellans in einem Bereich von bevorzugt 3 bis 15 mm, besonders bevorzugt 5 bis 10 mm und am meisten bevorzugt bei 8 mm liegt. Es ist bevorzugt, dass die Keimschale eine Länge in einem Bereich von 5 bis 30 cm aufweist, bevorzugt in einem Bereich von 10 bis 20 cm und am meisten bevorzugt eine Länge von 18 cm, eine Höhe in einem Bereich von 1 bis 15 cm, bevorzugt in einem Bereich von 3 bis 10 cm und am meisten bevorzugt eine Höhe von 6 cm und/oder eine Tiefe in einem Bereich von 5 bis 30 cm, bevorzugt in einem Bereich von 10 bis 20 cm und am meisten bevorzugt eine Tiefe von 12 cm. Es ist bevorzugt, dass die Keimschale in einem unteren Bereich ein Flüssigkeitsreservoir bildet, das mit einer Flüssigkeit, zum Beispiel Wasser, befüllbar ist.

Der im Rahmen der Erfindung genutzte Lochblecheinsatzumfasst eine Bodenplatte mit Löchern und zwei Seitenteile mit Haltevorrichtungen. Es ist bevorzugt, dass die Seitenteile des Lochblecheinsatzes eine Höhe in einem Bereich von 2 bis 3 cm aufweisen und/oder dass eine Anzahl der Löcher in der Bodenplatte des Lochblecheinsatzes in einem Bereich von 100 bis 200 Löchern liegt, bevorzugt in einem Bereich von 120 bis 160 Löchern und am meisten bevorzugt bei 140 Löchern. Es hat sich gezeigt, dass das Lochbild des Lochblecheinsatzes, bei dem die Löcher bevorzugt in gleichmäßigen Reihen und Spalten angeordnet sind, wobei die Löcher beispielsweise einen Durchmesser und einen Abstand innerhalb der Reihen und Spalten von 5 mm aufweisen, eine optimale Durchwurzelung durch die Wurzeln der Keimpflanzen ermöglicht. Es hat sich gezeigt, dass die bevorzugte Gestaltung des Lochbildes des Einsatzes darüber hinaus eine besonders wirksame Luftzirkulation innerhalb der Keimschale ermöglicht, so dass die Entstehung eines positiven Mikroklimas in der Schale gefördert wird. Es ist darüber hinaus bevorzugt, dass der Lochblecheinsatz aus Edelstahl hergestellt wird und eine Microlon-geschliffene Oberfläche umfasst, die das Anhaften von zum Beispiel Keimen besonders wirksam verhindert.

Es ist bevorzugt, dass die Keimschale und der Lochblecheinsatz ein Hardware-Kit bilden, bei dem die Schale und der Einsatz so aufeinander und auf das Saatpad gemäß der Erfindung abgestimmt sind, dass durch die kombinierte Verwendung des Kits mit dem Saatpad die Vorteile erreicht werden, dass das Saatgut keimt und ohne weitere Wasserzugabe bis zur Ernte wächst. Dies wird insbesondere durch die bevorzugte Höhenanordnung des Einsatzes und damit des Saatpads innerhalb der Keimschale erreicht, sowie durch die Flüssigkeitsmenge, die von der Keimschale aufgenommen werden kann. Es ist im Sinne der Erfindung bevorzugt, dass die Keimschale zur Aufnahme einer Flüssigkeitsmenge in einem Bereich von bevorzugt 0,2 bis 1,0 l, besonders bevorzugt in einem Bereich von 0,5 bis 0, 7 l und am meisten bevorzugt von 0,6 l geeignet ist. Es ist darüber hinaus bevorzugt, dass die Keimschale das Flüssigkeitsreservoir bildet, in das der Docht des Saatpads eintaucht, um sich mit der Flüssigkeit, bevorzugt Wasser, vollzusaugen und diese in die Matte zu fördern.

Es ist im Sinne der Erfindung bevorzugt, dass der Lochblecheinsatz Haltevorrichtungen umfasst, mit denen der Lochblecheinsatz lösbar in die Keimschale einhängbar ist. Diese Haltevorrichtungen können beispielsweise von Abschnitten gebildet werden, die bevorzugt senkrecht an den Seitenteilen des Einsatzes angeordnet vorliegen und die auf die Wände der Keimschale aufgelegt werden können, wodurch die lösbare Einhängung erreicht wird. Die Höhe des Einsatzes innerhalb der Keimschale wird vorteilhafterweise von der Höhe der Seitenwände des Lochblecheinsatzes bestimmt. Es ist insbesondere bevorzugt, dass die Abmessungen des Lochblecheinsatzes mit den Abmessungen der Keimschale korrespondieren, die ein lösbares Einhängen des Lochblecheinsatzes in die Keimschale ermöglichen. Vorzugsweise teilt der Lochblecheinsatz im eingehängten Zustand die Keimschale in einen unteren Bereich, der bevorzugt als Flüssigkeitsreservoir dient, und in einen oberen Bereich oberhalb des Lochblecheinsatzes, in dem bevorzugt mindestens ein Saatpad eingelegt werden kann. Es ist im Sinne der Erfindung bevorzugt, dass insbesondere zwei Saatpads auf den Lochlecheinsatz eingelegt werden, wobei es sich dabei bevorzugt um Saatpads mit gleichem Saatgut handeln kann. Es kann aber für andere Anwendungen auch bevorzugt sein, zwei Saatpads mit Saatkörnern unterschiedlicher Kultursorten zu verwenden.

Des Weiteren kann die Keimschale Aussparungen zum Einsetzen und Entfernen des Lochblecheinsatzes aufweisen, wobei die Aussparungen halbkreisförmig ausgebildet sind und/oder an Seitenwänden der Keimschale angeordnet vorliegen. Die Aussparungen dienen vorzugsweise auch dazu, frische Luft in die Keimschale zu leiten, insbesondere in den ersten Tagen nach dem Wässern, wenn die Keimschale von einer oder mehreren Anzuchtabdeckungen bedeckt sein kann. Es ist im Sinne der Erfindung insbesondere bevorzugt, dass die Keimschale und/oder der Lochblecheinsatz in einem Geschirrspüler zu reinigen sind. Der Fachmann weiß, dass in einem Geschirrspüler Wassertemperaturen von bis zu 70 °C eingestellt werden können, die zu einer besonders hygienischen Reinigung der Bestandteile des Hardware-Kits führen, beispielsweise zwischen zwei aufeinanderfolgenden Verwendungen des Kits zur Anzucht der Keimpflanzen. Dieser Vorteil kann insbesondere durch die Verwendung von Porzellan und Edelstahl bei der Herstellung der Keimschale und des Einsatzes erreicht werden, wobei bei der vorliegenden Erfindung insbesondere auf die Verwendung von Kunststoff verzichtet wird, um ein besonders werthaltiges, dauerhaftes, hygienisches und optisch ansprechendes Produkt bereitstellen zu können.

Es ist im Sinne der Erfindung bevorzugt, dass nach der abgeschlossenen Anzucht und Ernte der Keimpflanzen die abgeernteten und durchwurzelten Saatpads entsorgt werden, vorzugsweise in der grünen oder Biotonne. Nach einer Reinigung der Keimschale und/oder des Lochblecheinsatzes können "frische" Saatpads in die Keimschale eingelegt werden und ein neuer Anzuchtzyklus kann beginnen.

Das erfindungsgemäße Keim-Kit umfasst mindestens ein Saatpad, eine Keimschale und einen Lochblecheinsatz, wobei die Keimschale in einem unteren Bereich ein Flüssigkeitsreservoir bildet, das mit einer Flüssigkeit, zum Beispiel Wasser, befüllbar ist und der Lochblecheinsatz lösbar in die Keimschale einhängbar ist, wobei auf den Lochblecheinsatz das mindestens eine Saatpad so anordnenbar ist, dass ein Docht des mindestens einen Saatpads in die Flüssigkeit eintaucht.

Es ist im Sinne der Erfindung bevorzugt, den Lochblecheinsatz in die Keimschale einzuhängen, beispielsweise indem die Haltevorrichtungen des Lochblecheinsatzes auf die Wände der Keimschale aufgelegt werden, und das mindestens eine Saatpad auf den Lochblecheinsatz aufzulegen. Davor oder danach kann eine Flüssigkeit, zum Beispiel Wasser, in die Keimschale eingefüllt werden. Es ist bevorzugt, dass der Docht des Saatpads zwischen Lochblecheinsatz und Seitenwand der Keimschale nach unten in die Keimschale geführt wird, wo er in die Flüssigkeit eintaucht und sich mit ihr vollsaugen kann. Durch die Kapillarkräfte innerhalb des Dochtmaterials wird die Flüssigkeit nach oben in den Bereich oberhalb des Lochblecheinsatzes gezogen, wo es sich vorteilhafterweise innerhalb der Matte verteilt, wobei durch die auch innerhalb der bevorzugt filz- oder vliesartig ausgebildeten Matte wirkenden Kapillarkräfte eine besonders gleichmäßige Durchfeuchtung der Matte und damit eine besonders effektive Bewässerung der Keimpflanzen erreicht wird.

Es ist im Sinne der Erfindung bevorzugt, dass die Saatkörner nach kurzer Zeit, typischerweise 1 bis 2 Tagen, keimen und wurzeln und einen Jungpflanzenteil ausbilden, wobei die Wurzeln bevorzugt nach unten, das heißt in die Matte hinein, wachsen, während die Jungpflanzenteile, die bevorzugt auch als Keimlinge bezeichnet werden, nach oben wachsen. Es ist weiter bevorzugt, dass die Wurzeln die Matte durchwurzeln und diese durchdringen, bis sie nach unten aus der Matte und/oder dem Lochblecheinsatz herauswachsen, bis auch sie in die Flüssigkeit im Flüssigkeitsreservoir der Keimschale eintauchen, so dass sie sich vorteilhafterweise selbst mit Flüssigkeit versorgen können. Dieser Vorgang wird durch die vorteilhafte Ausgestaltung des Lochbildes des Lochblecheinsatzes unterstützt, der die Wurzeln der Keimpflanzen unkompliziert nach unten durchwachsen läßt, aber gleichzeitig für einen stabilen Halt der Saatpads innerhalb der Keimschale sorgt. Es ist insbesondere bevorzugt, dass zwei Saatpads nebeneinander auf dem Lochblecheinsatz angeordnet sind, wobei deren Abmessungen so ausgewählt sind, dass sie den oberen Bereich der Keimschale im Wesentlichen ausfüllen, wenn sie dort lose eingelegt werden.

In einer weiteren Ausführungsform der Erfindung umfasst das Keim-Kit mindestens eine Anzuchtabdeckung, die bevorzugt aus Papier und/oder Karton besteht. Es ist insbesondere bevorzugt, dass diese Abdeckung einmalig verwendet wird, weswegen sie beispielsweise einem frischen Saatpad beigefügt werden kann. Nach ihrer Verwendung kann sie unkompliziert im Biomüll oder im Altpapier entsorgt werden. Es ist bevorzugt, dass die Anzuchtabdeckung die Keimschale ganz oder teilweise bedeckt, insbesondere den Bereich der Keimschale, in dem ein Saatpad eingelegt ist. Die Abdeckung kann beispielsweise aus einem im Wesentlichen rechteckigen Stück Papier und/oder Karton bestehen, das an den Seiten Flügelabschnitte aufweist, die, wenn die Abdeckung auf die Keimschale aufgelegt wird, nach unten geklappt werden können, wodurch vorteilhafterweise eine lösbare Fixierung der Abdeckung auf der Keimschale erreicht werden kann. Die Oberseite der Abdeckung kann beispielsweise graphisch gestaltet sein, um einen optisch ansprechenden Eindruck zu erreichen. Es ist im Sinne der Erfindung bevorzugt, dass zwei Anzuchtabdeckungen verwendet werden, um eine vollständige Abdeckung der Keimschale zu gewährleisten. Denkbar ist aber ohne Weiteres auch eine ungeteilte Abdeckung.

Der Zweck für die Verwendung der Abdeckungen besteht darin, dass die verwendeten Sorten von Keimpflanzen vorzugsweise dunkelkeimende Pflanzen sind, deren Keimung besonders dann gut erfolgt, wenn die Saatkörner im Dunkeln angezogen werden. Es ist bevorzugt, die Abdeckungen nach dem Wässern, d.h. nach dem Angießen oder dem Vollsaugen der Saatpads, auf die Keimschale zu legen.

Vorteilhafterweise sorgen die Abdeckungen auch dafür, dass möglichst wenig Wasser verdunstet und sich innerhalb der Keimschale ein Mikroklima ausbildet, das sich besonders günstig auf den Keimprozess auswirkt. Insbesondere wird so eine optimale Feuchtigkeit an der Oberfläche des Saatguts gewährleistet, die die Keimbildung insbesondere so lange unterstützt, bis die Keimlinge eigene Wurzeln bilden. Insbesondere werden so positive Wachstums- und Ernteergebnisse ermöglicht. Es ist im Sinne der Erfindung bevorzugt, dass die Abdeckungen nach 3 bis 4 Tagen von der Keimschale entfernt werden oder dass die Keimpflanzen die Abdeckungen selbst von der Keimschale stoßen. Es hat sich als vorteilhaft erwiesen, auf der Rückseite der Abdeckung, die bevorzugt den Keimpflanzen zugewandt ist, eine Betriebsanleitung anzubringen, die beispielsweise kleine Textfelder und/oder graphische Elemente umfassen kann.

Vorliegend offenbart ist zudem ein Verfahren zum Wässern eines Saatpads umfassend die Schritte
a) Bereitstellung einer Keimschale
b) Einfüllen einer Flüssigkeit in die Keimschale
c) Einhängen eines Lochblecheinsatzes in die Keimschale
d) Einlegen von mindestens einem Saatpad auf den Lochblecheinsatz, wodurch sich das mindestens eine Saatpad mit der Flüssigkeit vollsaugt und wobei die Verfahrensschritte c) und d) auch in umgekehrter Reihenfolge durchgeführt werden können.

Es ist bevorzugt, dass das offenbarte Verfahren mit einem erfindungsgemäßen Keim-Kit mit einer Keimschale, einem Lochblecheinsatz und einem Saatpad durchgeführt wird.

Vorzugsweise wird eine Keimschale bereitgestellt, die für die Aufnahme einer Flüssigkeitsmenge in einem Bereich von bevorzugt 0,2 bis 1,0 I, besonders bevorzugt in einem Bereich von 0,5 bis 0,7 I und am meisten bevorzugt von 0,6 I geeignet ist. In diese Keimschale wird eine Flüssigkeitsmenge in diesem bevorzugten Bereich eingefüllt, beispielsweise 0,6 I Wasser. Es kann im Sinne der Erfindung bevorzugt sein, dass der Füllstand innerhalb der bereitgestellten Keimschale, der einer solchen Flüssigkeitsmenge entspricht, mit einer Markierung innerhalb und/oder außerhalb der Keimschale anzugeben ist, beispielsweise durch eine optische Markierung. Dadurch ist die Durchführung des Verfahrens besonders einfach, da beispielsweise kein Meßbecher erforderlich ist.
In einem weiteren Schritt wird der Lochblecheinsatz in die Keimschale eingehängt und anschließend mindestens ein Saatpad in den Lochblecheinsatz eingelegt. Es kann auch bevorzugt sein, zunächst mindestens ein Saatpad auf dem Lochblecheinsatz anzuordnen und anschließend den "befüllten" Lochblecheinsatz in die Keimschale einzuhängen. Es ist bevorzugt, dass diese beiden Verfahrensschritte in jeder beliebigen Reihenfolge durchgeführt werden können.
Es ist im Sinne der Erfindung bevorzugt, dass insbesondere zwei Saatpads auf den Lochlecheinsatz eingelegt werden, wobei es sich dabei bevorzugt um Saatpads mit gleichem Saatgut handeln kann. Es kann aber für andere Anwendungen auch bevorzugt sein, zwei Saatpads mit Saatkörnern unterschiedlicher Kultursorten zu verwenden.
Es ist im Sinne der Erfindung bevorzugt, dass die Flüssigkeit in der Keimschale einen Flüssigkeitsstand aufweist, der vorzugsweise mit der Höhe der in der Keimschale stehenden Flüssigkeit korrespondiert. Es ist bevorzugt, dass die Flüssigkeit höher in der Keimschale steht als die Bodenplatte des Lochblecheinsatzes; mit anderen Worten, es ist im Sinne der Erfindung bevorzugt, dass die Flüssigkeit die Bodenplatte des Lochblecheinsatzes bedeckt. Beispielsweise kann die Flüssigkeit, wenn Verfahrensschritt c) vor Verfahrensschritt d) ausgeführt wird, 3 bis 6 mm über der Bodenplatte des Lochblecheinsatzes stehen. Wenn die Saatpads dann in den Lochblecheinsatz eingelegt werden, gelangen sie bevorzugt unmittelbar in Kontakt mit der Flüssigkeit und können sich mit dieser vollsaugen.

Es ist insbesondere bevorzugt, die Saatpads so in die Keimschale beziehungsweise auf die Bodenplatte des Lochblendeneinsatzes beziehungsweise in den Lochblecheinsatz einzulegen, dass ein Docht des Saatpads zwischen Keimschalenwand und Lochblecheinsatz nach unten in den unteren Bereich der Keimschale geführt wird, so dass er in Kontakt mit der Flüssigkeit gelangt. Der Docht ist vorzugsweise so ausgestaltet, dass er auch dann noch in Kontakt mit der Flüssigkeit gelangt, wenn sich deren Menge, beispielsweise aufgrund von Verdunstungseffekten, verringert hat. Es ist am meisten bevorzugt, dass durch den Kontakt zwischen Flüssigkeit im Flüssigkeitsreservoir der Keimschale und Docht des Saatpads eine wirksame Bewässerung der Matte, die u.a. das Saatpad bildet, gewährleistet wird.

In einer weiteren offenbarten Ausführungsform kann die Keimschale nach Durchführung des Verfahrens mit mindestens einer Anzuchtabdeckung abgedeckt werden, um die Ausbildung eines Mikroklimas innerhalb der Keimschale, und somit den Keimprozess, zu begünstigen und die für den Keimprozess erforderliche Dunkelheit zu erzeugen, insbesondere dann, wenn das Saatgut von dunkelkeimenden Pflanzensorten stammt. Vorteilhafterweise können zwei Anzuchtabdeckungen verwendet werden.

Die hinsichtlich des Saatpads, der Keimschale, des Lochblecheinsatzes, des Hardware-Kits und des Keim-Kits ausgeführten Vorteile und technischen Wirkungen gelten auch für das offenbarte Verfahren.

Die Erfindung wird anhand der nachfolgenden Figuren näher beschrieben; es zeigt:
- Figur 1: Darstellung bevorzugter Ausführungsformen der Elemente der Erfindung
- Figur 2: beispielhafte Darstellung, wie die Elemente der Erfindung zusammengesetzt werden können
- Figur 3: beispielhafte Darstellung des Angießprozesses
- Figur 4: Darstellung einer bevorzugten Ausführungsform der Keimschale im abgedeckten Zustand
- Figur 5: Darstellung einer bevorzugten Ausführungsform der Keimschale, wenn die Keimpflanzen die Anzuchtabdeckung von der Keimschale stoßen
- Figur 6: Darstellung einer bevorzugten Ausführungsform der Keimschale, wobei die Keimpflanzen erntereif sind

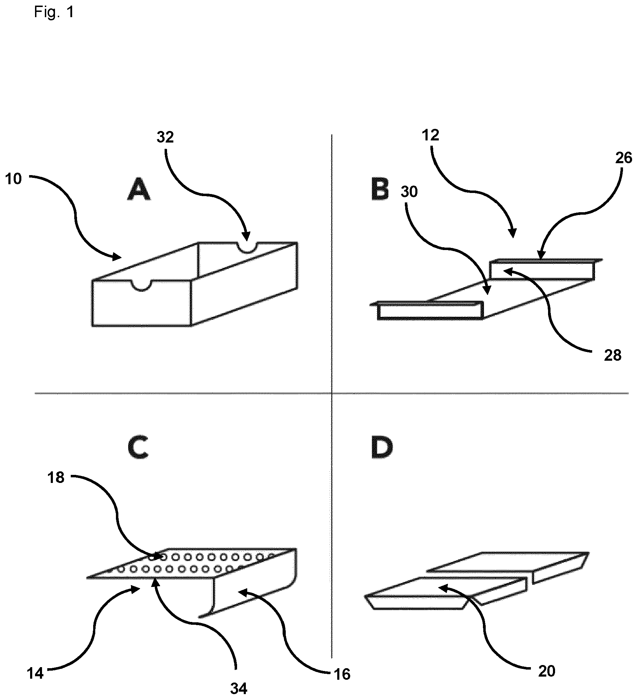

Figur 1 zeigt eine Darstellung bevorzugter Ausführungsformen der Elemente der Erfindung. Abbildung A zeigt eine bevorzugte Ausführungsform der Keimschale (10), die vorzugsweise eine rechteckige Grundfläche aufweist, sowie vier Seitenwände, die darüber hinaus Aussparungen (32) aufweisen können, die das Einhängen eines Lochblecheinsatzes (12) erleichtern. Die Keimschale (10) dient in einem unteren Bereich insbesondere als Flüssigkeitsreservoir (36), in das der Docht (16) eines Saatpads (14) eintauchen kann, um die Bewässerung des Saatpads (14) und der darauf angeordneten Saatkörner (18) zu gewährleisten.

Abbildung B zeigt eine bevorzugte Ausführungsform eines Lochblecheinsatzes (12), der in die Keimschale (10) eingehängt werden kann. Die Einhängung kann beispielsweise mit Haltevorrichtungen (26) erfolgen, die an den Seitenwänden (28) des Lochblecheinsatzes (12) angeordnet sein können. Es ist insbesondere bevorzugt, dass die Haltevorrichtungen (26) auf die Seitenwände der Keimschale (10) aufgelegt werden. Die Höhe der Seitenwände (28) des Lochblecheinsatzes (12) legen dabei fest, in welcher Höhe der Bodenbereich (30) des Lochblecheinsatzes innerhalb der Keimschale (10) angeordnet vorliegt. Nicht dargestellt in Abbildung B sind die Löcher im Bodenbereich (30) des Lochblecheinsatzes (12), die das bevorzugte Lochbild bilden, das die optimale Durchwurzelung ermöglicht.

Abbildung C zeigt eine bevorzugte Ausführungsform eines Saatpads (14), das aus einer Matte (34, nicht räumlich dargestellt) und einem Docht (16) besteht. Auf der Matte (34) sind Saatkörner (18) angeordnet, wobei die dargestellte Anordnung der Saatkörner (18) auf der Matte (34) nur beispielhaft ist. Der Docht (16) besteht bevorzugt aus einem gurtähnlichen Leinen-Material, dessen Breite bevorzugt mit der Breite der Matte (34) korrespondiert, das aber eine größere Länge als die Matte (34) aufweist. Es ist bevorzugt, dass der Docht (16) im Wesentlichen vollflächig auf der Unterseite der Matte (34) befestigt vorliegt und dass der Docht (16) einen weiteren Abschnitt umfasst, der über die Matte hinausragt, so dass dieser herausragende Abschnitt zwischen Lochblecheinsatz (12) und einer Seitenwand der Keimschale (10) hindurchgeführt werden kann, um in das Flüssigkeitsreservoir (36) der Keimschale (10) einzutauchen.

Abbildung D zeigt eine bevorzugte Ausführungsform von Anzuchtabdeckungen (20), die nach dem Wässern des Saatpads (14) auf die Keimschale (10) aufgelegt werden, um die für die Keimung der Saatkörner (18) erforderliche Dunkelheit und/der das keimbegünstigende Mikroklima bereitzustellen.

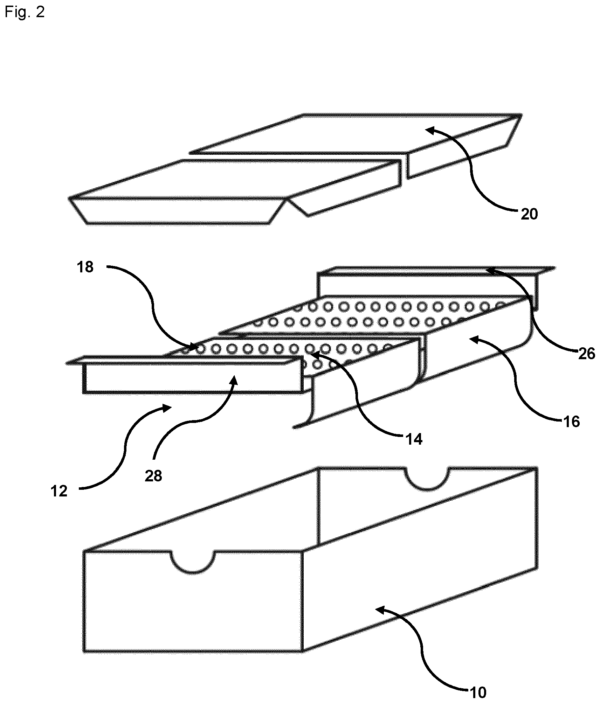

Figur 2 zeigt eine beispielhafte Darstellung, wie die Elemente der Erfindung zusammengesetzt werden können. Zu sehen ist eine Keimschale (10), in die ein Lochblecheinsatz (12) eingehängt werden kann. Auf dem Lochblecheinsatz (12) sind beispielhaft zwei Saatpads (14) angeordnet, deren Dochte (16) auf einer Seite des Lochblecheinsatzes (12) in das Flüssigkeitsreservoir (36) der Keimschale (10) geführt werden. Auf dem Saatpad (14) sind Saatkörner (18) angeordnet. Weiter dargestellt sind zwei Anzuchtabdeckungen (20), mit denen die Keimschale (10) in den ersten Tagen nach dem Wässern abgedunkelt wird und die die Entstehung eines keimbegünstigenden Mikroklimas fördern.

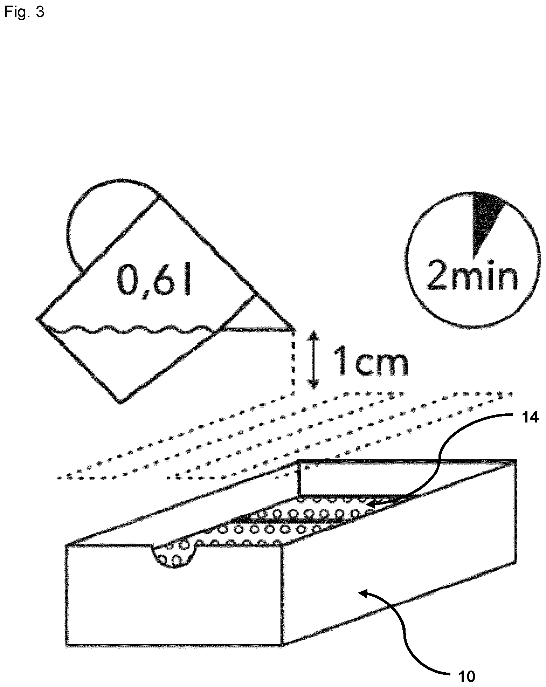

Figur 3 zeigt eine beispielhafte Darstellung des Angießprozesses. Dargestellt ist die Keimschale (10), in der sich der Lochblecheinsatz (12) mit den Saatpads (14) mit den Samenkörnern (18) befindet. Angedeutet ist eine Gießkanne, die mit einer bevorzugten Flüssigkeitsmenge von 0,6 I gefüllt ist. Die gestrichelte Linie deutet eine Bewegung an, die mit der Gießkanne ausgeführt werden kann, um eine optimale Bewässerung der Saatpads (14) zu erreichen. Dabei kann die Gießkanne beispielsweise in einer Höhe von 1 cm über den Saatpads (14) geführt werden. Vorzugsweise wird der Angießvorgang über einen Zeitraum von beispielsweise 2 min durchgeführt, um den Saatpads ausreichend Zeit zu geben, die Flüssigkeit aufzunehmen.

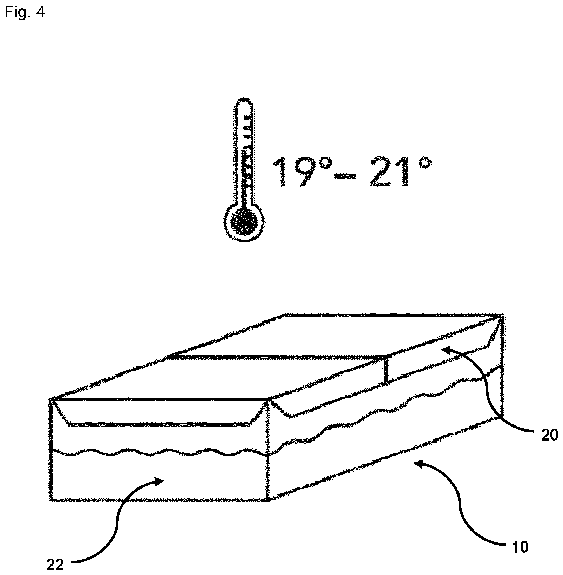

Figur 4 zeigt die Darstellung einer bevorzugten Ausführungsform der Keimschale (10) im abgedeckten Zustand. Zu sehen ist die Keimschale (10), die mit einer Flüssigkeit (20), beispielsweise Wasser, gefüllt ist. Die in der Keimschale (10) angeordnet vorliegenden Elemente der Erfindung sind nicht dargestellt, da die Keimschale (10) von zwei Anzuchtabdeckungen (20) abgedeckt ist, um in der Keimschale (10) die für die Keimung erforderliche Dunkelheit und die erwünschte Entstehung des keimbegünstigenden Mikroklimas zu gewährleisten. Die optimale Keimungstemperatur für die Keimpflanzen liegt in einem bevorzugten Bereich von 19-21 °C.

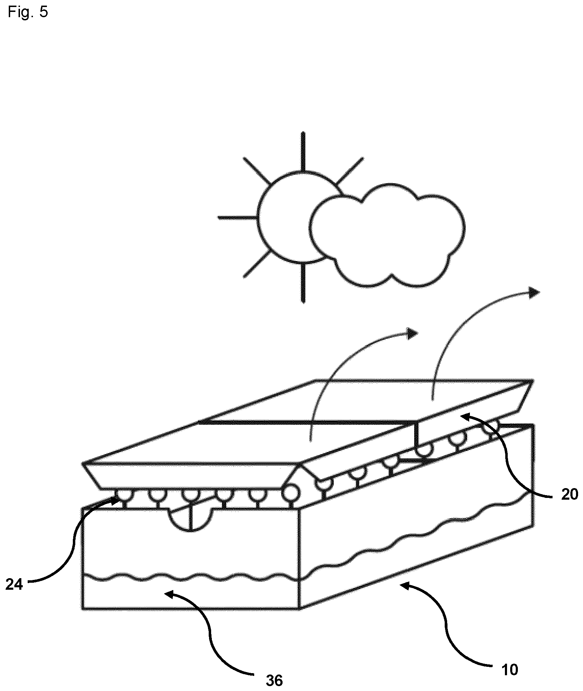

Figur 5 zeigt die Darstellung einer bevorzugten Ausführungsform der Keimschale (10), wenn die Keimpflanzen die Anzuchtabdeckungen (20) von der Keimschale (10) stoßen. Dargestellt sind die Keimschale (10), sowie die Keimpflanzen (24). Zu sehen ist die Keimschale (10) in einem Zustand, in dem die Keimpflanzen (24) eine Größe erreicht haben, so dass ihre Spitzen anfangen, über die Keimschale (10) herauszuragen, so dass sie die Anzuchtabdeckungen (20) von der Keimschale (10) stoßen. Es kann im Sinne der Erfindung ebenso bevorzugt sein, wenn ein Nutzer die Anzuchtabdeckungen (20) von der Keimschale (10) entfernt. Die Entfernung der Anzuchtabdeckungen wird durch die zwei Pfeile in Figur 5 angedeutet. Das Sonnen-/Wolken-Symbol soll andeuten, dass die Keimpflanzen (24) nach Entfernung der Anzuchtabdeckungen (20) keiner direkten Sonneneinstrahlung ausgesetzt werden sollen. Es ist allerdings bevorzugt, dass die Keimschale (10) den natürlichen Lichtverhältnissen ausgesetzt werden, d.h. dem hellen Tageslicht am Tage und der Dunkelheit in der Nacht.

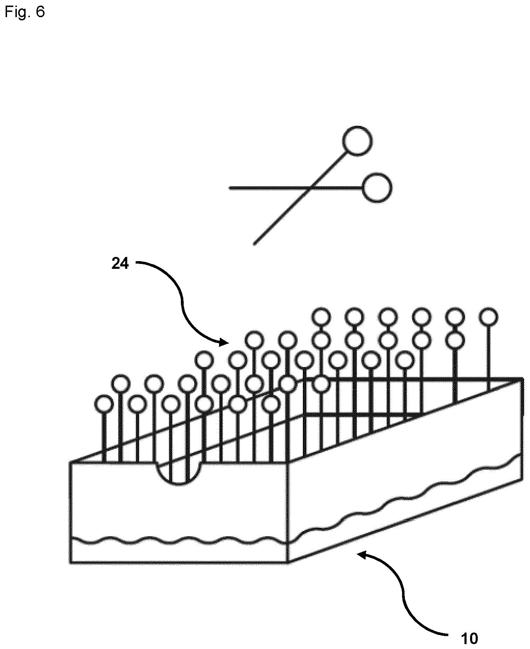

Figur 6 zeigt die Darstellung einer bevorzugten Ausführungsform der Keimschale (10), wobei die Keimpflanzen (24) erntereif sind. Dargestellt ist eine Keimschale (10) und Keimpflanzen (24), die eine Höhe erreicht haben, so dass die Keimpflanzen (24) besonders einfach mit einem Schneidemittel, beispielsweise einer Schere oder einem Messer, geerntet werden können. Dieser Zustand wird üblicherweise nach 6 - 10 Tagen nach dem Wässern erreicht.

### Bezugszeichenliste:

- 10: Keimschale
- 12: Lochblecheinsatz
- 14: Saatpad
- 16: Docht
- 18: Saatkörner
- 20: Anzuchtabdeckung
- 22: Flüssigkeit
- 24: Keimpflanzen
- 26: Haltevorrichtungen
- 28: Seitenwände des Lochblecheinsatzes
- 30: Bodenbereich des Lochblecheinsatzes
- 32: Aussparung
- 34: Matte
- 36: Flüssigkeitsreservoir

## Patentansprüche

1. Keim-Kit umfassend mindestens
- ein Saatpad (14) umfassend eine Matte (34) und Saatkörner (18), wobei die Matte (34) einen Docht (16) zum Eintauchen in ein Flüssigkeitsreservoir (36) umfasst, so dass eine Flüssigkeit (22) mit Hilfe von Kapillarkräften durch den Docht (16) in die Matte (34) förderbar und in der Matte (34) verteilbar ist, wobei die Matte (34) Saatkörner (18) umfasst, die mit einen ersten Klebstoff befestigt sind, wobei der erste Klebstoff je nach Beschaffenheit der Saatkörner (18) variierbar ist und Guarkernmehl, Johannisbrotkernmehl und/oder Xanthan umfasst, sowie
- ein Hardware-Kit umfassend eine Keimschale (10) und ein Lochblecheinsatz (12), wobei der Lochblecheinsatz (12) eine Bodenplatte (30) mit Löchern und zwei Seitenteile (28) mit Haltevorrichtungen (26) umfasst, wobei der Lochblecheinsatz (12) mit den Haltevorrichtungen (26) lösbar in die Keimschale (10) einhängbar ist, und wobei die Keimschale (10) ein Flüssigkeitsreservoir (36) bildet, das mit einer Flüssigkeit (22), zum Beispiel Wasser, befüllbar ist, und der Lochblecheinsatz (12) lösbar in die Keimschale (10) einhängbar ist, wobei auf dem Lochblecheinsatz (12) das mindestens eine Saatpad (14) so anordnenbar ist, dass der Docht (16) des mindestens einen Saatpads (14) in die Flüssigkeit (22) eintaucht,
- wobei der Docht (16) im Wesentlichen vollflächig auf einer Unterseite der Matte (34) angeordnet vorliegt und mit einem zweiten Klebstoff befestigt ist.

2. Keim-Kit nach Anspruch 1
**dadurch gekennzeichnet, dass**
die Matte (34) wenigstens ein Naturmaterial umfasst und ausgewählt ist aus einer Gruppe umfassend Hanf, Lyocell, Filz, beispielsweise aus Grass und/oder Bambus, Kokosfaser, Vermiculit, Perlit, Jute, Leinen, Flachs, Cellulose, Holz, Steinwolle, Agar-Agar und/oder einer Kombination daraus.

3. Keim-Kit nach Anspruch 1 oder 2
**dadurch gekennzeichnet, dass**
der Docht (16) von einem gurtartigen Material gebildet wird, wobei das Material eine Naturfaser, bevorzugt Leinen, umfasst.

4. Keim-Kit nach einem der vorherigen Ansprüche
**dadurch gekennzeichnet, dass**
das Saatpad (14) einen Schichtaufbau aufweist umfassend
den Docht (16), der mit dem zweiten Klebstoff auf der Unterseite der Matte (34) befestigt ist, wobei auf und/oder in der Matte (34) die Samenkörner (18) angeordnet vorliegen, die mit dem ersten Klebstoff auf der Oberseite der Matte (34) fixiert sind.

5. Keim-Kit nach einem der vorherigen Ansprüche
**dadurch gekennzeichnet, dass**
der der zweite Klebstoff Guarkernmehl, Johannisbrotkernmehl und/oder Xanthan umfassen.

6. Keim-Kit nach einem der vorherigen Ansprüche, **dadurch gekennzeichnet, dass** ein Material der Keimschale (10) ausgewählt ist aus einer Gruppe umfassend Porzellan, Keramik, Holz, Stein, Beton, Glas, Metall und/oder einer Kombination daraus.

7. Keim-Kit nach einem der vorherigen Ansprüche, **dadurch gekennzeichnet, dass** die Keimschale (10) zur Aufnahme einer Flüssigkeitsmenge in einem Bereich von 0,2 bis 1,0 I geeignet ist, bevorzugt in einem Bereich von 0,5 bis 0,7 I und besonders bevorzugt von 0,6 I, und/oder eine Wanddicke der Keimschale (10) in einem Bereich von 3 bis 15 mm liegt, bevorzugt in einem Bereich von 5 bis 10 mm und besonders bevorzugt bei 8 mm.

8. Keim-Kit nach einem der vorherigen Ansprüche, **dadurch gekennzeichnet, dass** die Keimschale (10) eine Länge in einem Bereich von 5 bis 30 cm aufweist, bevorzugt in einem Bereich von 10 bis 20 cm und am meisten bevorzugt eine Länge von 18 cm und/oder eine Höhe in einem Bereich von 1 bis 15 cm aufweist, bevorzugt in einem Bereich von 3 bis 10 cm und am meisten bevorzugt eine Höhe von 6 cm, und/oder eine Tiefe in einem Bereich von 5 bis 30 cm aufweist, bevorzugt in einem Bereich von 10 bis 20 cm und am meisten bevorzugt eine Tiefe von 12 cm.

9. Keim-Kit nach einem der vorherigen Ansprüche, **dadurch gekennzeichnet, dass** die Seitenteile (28) des Lochblecheinsatzes (12) eine Höhe in einem Bereich von 2 bis 3 cm aufweisen, und/oder eine Anzahl der Löcher in der Bodenplatte (30) des Lochblecheinsatzes (12) in einem Bereich von 100 bis 200 Löchern liegt, bevorzugt in einem Bereich von 120 bis 160 Löchern und am meisten bevorzugt bei 140 Löchern.

10. Keim-Kit nach einem der vorherigen Ansprüche, **dadurch gekennzeichnet, dass** die die Löcher des Lochblecheinsatzes (12) einen Durchmesser von 5 mm aufweisen, und/oder gleichmäßig in Reihen und Spalten angeordnet vorliegen, wobei die Löcher bevorzugt einen innerhalb der Reihen und/oder Spalten von 5 mm aufweisen.

## Claims

1. A seed kit, comprising at least
- a seed pad (14) comprising a mat (34) and seeds (18), wherein the mat (34) comprises a wick (16) for dipping into a liquid reservoir (36), such that a liquid (22) can be delivered into the mat (34) through the wick (16) and distributed within the mat (34) by means of capillary forces, wherein the mat (34) comprises seeds (18) which are fastened with a first adhesive, wherein the first adhesive can be varied based on the condition of the seeds (18) and comprises guar gum, carob gum and/or xanthane, as well as
- a hardware kit comprising a seed tray (10) and a perforated sheet-metal insert (12), wherein the perforated sheet-metal insert (12) comprises a bottom plate (30) with holes and two side parts (28) with holding devices (26), wherein the perforated sheet-metal insert (12) can be detachably suspended in the seed tray (10) by means of the holding devices (26), and wherein the seed tray (10) forms a liquid reservoir (36) which can be filled with a liquid (22), such as water, and the perforated sheet-metal insert (12) can be detachably suspended in the seed tray (10), wherein the at least one seed pad (14) can be arranged on the perforated sheet-metal insert (12) such that the wick (16) of the at least one seed pad (14) dips into the liquid (22),
- wherein the wick (16) is substantially arranged over the entire area of a bottom side of the mat (34) and is fastened using a second adhesive.

2. The seed kit according to claim 1, **characterised in that** the mat (34) comprises at least one natural material and is selected from a group comprising hemp, lyocell, felt, for example made of grass and/or bamboo, coconut fibre, vermiculite, perlite, jute, linen, flax, cellulose, wood, rock-wool, agar-agar and/or a combination thereof.

3. The seed kit according to claim 1 or 2, **characterised in that** the wick (16) is formed by a belt-like material, wherein the material comprises a natural fibre, preferably linen.

4. The seed kit according to any one of the preceding claims, **characterised in that** the seed pad (14) has a layered structure comprising the wick (16), which is fastened to the bottom side of the mat (34) using the second adhesive, wherein the seeds (18), which are fastened to the top side of the mat (34) using the first adhesive, are arranged on and/or in the mat (34).

5. The seed kit according to any one of the preceding claims, **characterised in that** the second adhesive comprises guar gum, carob gum and/or xanthane.

6. The seed kit according to any one of the preceding claims, **characterised in that** a material of the seed tray (10) is selected from the group comprising porcelain, ceramic, wood, stone, concrete, glass, metal and/or a combination thereof.

7. The seed kit according to any one of the preceding claims, **characterised in that** the seed tray (10) is suitable for receiving an amount of liquid in a range from 0.2 to 1.0 L, preferably in a range from 0.5 to 0.7 L and particularly preferably of 0.6 L and/or **in that** a wall thickness of the seed tray (10) is in a range from 3 to 15 mm, preferably in a range from 5 to 10 mm, particularly preferably is 8 mm.

8. The seed kit according to any one of the preceding claims, **characterised in that** the seed tray (10) has a length in a range from 5 to 30 cm, preferably in a range from 10 to 20 cm and most preferably has a length of 18 cm and/or has a height in a range from 1 to 15 cm, preferably in a range from 3 to 10 cm and most preferably has a height of 6 cm and/or has a depth in a range from 5 to 30 cm, preferably in a range from 10 to 20 cm and most preferably has a depth of 12 cm.

9. The seed kit according to any one of the preceding claims, **characterised in that** the side parts (28) of the perforated sheet-metal insert (12) have a height in a range from 2 to 3 cm and/or **in that** a number of holes in the bottom plate (30) of the perforated sheet-metal insert (12) is in a range from 100 to 200 holes, preferably in a range from 120 to 160 holes and most preferably is 140 holes.

10. The seed kit according to any one of the preceding claims, **characterised in that** the holes of the perforated sheet-metal insert (12) have a diameter of 5 mm and/or are evenly arranged in rows and columns, wherein the holes preferably have a spacing of 5 mm within the rows and/or columns.

## Revendications

1. Jeu de germination comprenant au moins
- un tampon d'ensemencement (14) comprenant un tapis (34) et des graines (18), dans lequel le tapis (34) comprend une mèche (16) pour l'immersion dans un réservoir de liquide (36) de sorte qu'un liquide (22) peut être acheminé au moyen de forces capillaires à travers la mèche (16) dans le tapis (34) et peut être réparti dans le tapis (34), dans lequel le tapis (34) comprend des graines (18) qui sont fixées avec un premier adhésif, dans lequel le premier adhésif peut varier en fonction de la nature des graines (18) et comprend la gomme de guar, la gomme de caroube et/ou la gomme de xanthane, ainsi que
- un jeu de matériel comprenant un plat de germination (10) et un insert à tôle perforée (12), dans lequel l'insert à tôle perforée (12) comprend une plaque de base (30) dotée de trous et deux parties latérales (28) dotées de dispositifs de maintien (26), dans lequel l'insert à tôle perforée (12) avec les dispositifs de maintien (26) peuvent être suspendus de manière amovible dans le plat de germination (10), et dans lequel le plat de germination (10) forme un réservoir de liquide (36) qui peut être rempli d'un liquide (22), par exemple de l'eau, et l'insert à tôle perforée (12) peut être suspendu de manière amovible dans le plat de germination (10), dans lequel l'au moins un tampon d'ensemencement (14) peut être disposé sur l'insert à tôle perforée (12) de sorte que la mèche (16) de l'au moins un tampon d'ensemencement (14) est immergée dans le liquide (22),
- dans lequel la mèche (16) est disposée sensiblement sur toute la zone sur une face inférieure du tapis (34) et est fixée avec un second adhésif.

2. Jeu de germination selon la revendication 1,
**caractérisé en ce que**
le tapis (34) comprend au moins un matériau naturel et est choisie dans un groupe comprenant le chanvre, le lyocell, le feutre, par exemple parmi l'herbe et/ou le bambou, les fibres de coco, la vermiculite, la perlite, le jute, le lin, la cellulose, le bois, la laine de roche, l'agar agar et/ou une combinaison de ceux-ci.

3. Jeu de germination selon la revendication 1 ou 2,
**caractérisé en ce que**
la mèche (16) est constituée d'un matériau en forme de ceinture, dans lequel le matériau comprend une fibre naturelle, de préférence du lin.

4. Jeu de germination selon l'une des revendications précédentes,
**caractérisé en ce que**
le tampon d'ensemencement (14) présente une structure en couches comprenant la mèche (16), laquelle est fixée sur la face inférieure du tapis (34) avec le second adhésif, dans lequel les graines (18) sont disposées sur et/ou dans le tapis (34), lesquels graines sont fixées avec le premier adhésif sur la face supérieure du tapis (34).

5. Jeu de germination selon l'une des revendications précédentes,
**caractérisé en ce que**
le second adhésif comprend de la gomme de guar, de la gomme de caroube et/ou de la gomme de xanthane.

6. Jeu de germination selon l'une des revendications précédentes,
**caractérisé en ce qu'**un
matériau du plat de germination (10) est choisi dans un groupe comprenant la porcelaine, la céramique, le bois, la pierre, le béton, le verre, le métal et/ou une combinaison de ceux-ci.

7. Jeu de germination selon l'une des revendications précédentes,
**caractérisé en ce que**
le plat de germination (10) est adapté pour recevoir une quantité de liquide comprise dans une plage de 0,2 à 1,0 l, de préférence dans une plage de 0,5 à 0,7 l et de manière particulièrement préférée de 0,6 l, et/ou l'épaisseur de paroi du plat de germination (10) est comprise dans une plage de 3 à 15 mm, de préférence dans une plage de 5 à 10 mm et de manière particulièrement préférée de 8 mm.

8. Jeu de germination selon l'une des revendications précédentes, **caractérisé en ce que** le plat de germination (10) présente une longueur comprise dans une plage de 5 à 30 cm, de préférence dans une plage de 10 à 20 cm et de manière préférée entre toutes une longueur de 18 cm et/ou présente une hauteur comprise dans une plage de 1 à 15 cm, de préférence dans une plage de 3 à 10 cm et de manière préférée entre toutes une hauteur de 6 cm, et/ou une profondeur comprise dans une plage de 5 à 30 cm, de préférence dans une plage de 10 à 20 cm, et de manière préférée entre toutes une profondeur de 12 cm.

9. Jeu de germination selon l'une des revendications précédentes, **caractérisé en ce que** les parties latérales (28) de l'insert à tôle perforée (12) présentent une hauteur comprise dans une plage de 2 à 3 cm, et/ou un nombre de trous dans la plaque de base (30) de l'insert à tôle perforée (12) est compris dans une plage de 100 à 200 trous, de préférence dans une plage de 120 à 160 trous, et de manière préférée entre toutes de 140 trous.

10. Jeu de germination selon l'une des revendications précédentes, **caractérisé en ce que** les trous de l'insert à tôle perforée (12) présentent un diamètre de 5 mm et/ou sont disposés uniformément en rangées et colonnes, dans lequel les trous présentent de préférence un diamètre dans les rangées et/ou les colonnes de 5 mm.
